# EUROPEAN PATENT APPLICATION

(11) **EP 4 644 320 A1**
(43) Date of publication of application: **05.11.2025**
(21) Application number: 23912875.4
(22) Date of filing: 26.12.2023
(51) Int. Cl.: C01B 32/33, C01B 32/336, H01M 4/587, H01M 4/02

(54) **METHOD FOR MANUFACTURING POROUS CARBON SUPPORT AND POROUS CARBON SUPPORT MANUFACTURED THEREBY**

(30) Priority: 26.12.2022 KR 20220184122
(71) Applicant: Hanwha Solutions Corporation, Jung-gu Seoul 04541 (KR)
(72) Inventor: JEON, HyoJin, Seoul 04541 (KR); KIM, Eui Duk, Seoul 04541 (KR); PARK, Sarang, Seoul 04541 (KR); KIM, Do Heung, Seoul 04541 (KR); IM, Jangbin, Daejeon 34128 (KR); JANG, Dawon, Seoul 04541 (KR); YIM, Kyoungwon, Seoul 04541 (KR)
(74) Representative: Berggren Oy
(86) International application number: PCT/KR2023/021574
(87) International publication number: WO 2024/144200

(57) **Abstract**

The present invention can provide a method for manufacturing a porous carbon support, the method comprising the steps of: (1) subjecting a petroleum-based raw material to pyrolysis and polycondensation to form pitch; (2) solidifying and pelletizing the pitch to obtain solid pitch pellets; (3) stabilizing the solid pitch pellets without pulverization; and (4) carbonizing the stabilized pitch pellets to obtain a carbonized product.

## Description

### TECHNICAL FIELD

The present invention relates to a method for manufacturing a porous carbon support and a porous carbon support manufactured thereby.

### BACKGROUND ART

Carbon materials are materials made of carbon, which is one of the most common resources on Earth. Carbon materials are very light and strong, and have excellent electrical and thermal conductivity, making them a key material that is widely used in hydrogen cars, aviation, secondary batteries and high-end consumer goods.

Carbon materials can be manufactured from various raw materials such as palm kernel shells, polyacrylonitrile, rayon and pitch. Among these, carbon materials manufactured from solid raw materials such as palm kernel shells are difficult to control in terms of molecular weight and composition (Korean Patent Laid-Open Publication No. 10-2019-0093960).

On the other hand, pitch, which is a viscoelastic solid polymer that is extracted from crude oil or plants, has the advantage of high yield when it is converted to carbon materials and low-cost raw materials, and the molecular structure thereof is closer to the graphite structure than other raw materials, which reduces the energy required for heat treatment (US Patent Nos. 4,242,196 and 4,340,464).

In particular, pyrolysis fuel oil (PFO), naphtha cracking bottom oil (NCB), vacuum residue (VR) and fluid catalytic cracking decant oil (FCC-DO), which are obtained as by-products in the petroleum refining process, have a high content of aromatic compounds and a low content of impurities such as sulfur and nitrogen, and therefore, pitch manufactured therefrom is attracting attention as a material for carbon materials.

Conventionally, a carbon precursor in the form of a pellet was manufactured from such pitch, and this was pulverized into a powder form, and then, an activation process was performed to manufacture a porous carbon support. However, since the porous carbon support manufactured in this way mainly includes micropores, there is a problem in that the deposition is not carried out well into the deep pores when chemical vapor deposition (CVD) or the like is performed in a subsequent process.

### DISCLOSURE

### TECHNICAL PROBLEM

One of several objects of the present invention is to provide a method for manufacturing a porous carbon support having controlled pore characteristics such that sufficient deposition can be performed into deep pores during chemical vapor deposition, and a porous carbon support produced therefrom.

One of several objects of the present invention is to provide a method for manufacturing a porous carbon support that is capable of producing a negative electrode material having high charge/discharge capacity, and a porous carbon support produced therefrom.

One of several objects of the present invention is to provide a method for manufacturing a porous carbon support that is capable of producing a negative electrode material having improved cycle characteristics, and a porous carbon support produced therefrom.

One of several objects of the present invention is to provide a method for manufacturing a porous carbon support that is capable of producing a negative electrode material having excellent mechanical properties, and a porous carbon support produced therefrom.

### TECHNICAL SOLUTION

According to an exemplary embodiment of the present invention, the present invention may provide a method for manufacturing a porous carbon support, including (1) subjecting a petroleum-based raw material to pyrolysis and polycondensation to form pitch; (2) solidifying and pelletizing the pitch to obtain solid pitch pellets; (3) stabilizing the solid pitch pellets without pulverization; and (4) carbonizing the stabilized pitch pellets to obtain a carbonized product.

In this case, a polycondensation temperature of the pitch synthesis in step (1) may be within a range of 350°C or more and/or 500°C or less.

In addition, a softening point of the pitch synthesized in step (1) may be 200°C or more.

In an example of the present invention, a thickness of the solid pitch pellets of step (3) may be 1 mm or more.

In an example, step (3) may include heating the unpulverized solid pitch pellets to a temperature of 250°C or more and/or 400°C or less, and the heating may be performed by microwave or plasma.

Meanwhile, an oxygen content of the pitch pellets stabilized in step (3) may be 10 wt% or more.

Additionally, in step (3), a distribution deviation of oxygen contents in a stabilized pitch pellet cross-section may be 30% or less.

In an example, the method for manufacturing a porous carbon support according to the present invention may further include depositing silicon after step (4).

In this case, the depositing may be performed at a temperature of 300°C or more and/or 600°C or less and under a silane (SiH₄) gas atmosphere of 50 sccm or more and/or 500 sccm or less.

In addition, a content of the deposited silicon may be 10 wt% or more based on a weight of the entire porous carbon support.

Another exemplary embodiment of the present invention may provide a porous carbon support manufactured by the above-described manufacturing method.

Still another exemplary embodiment of the present invention may provide a battery negative electrode material, including the above-described porous carbon support.

### ADVANTAGEOUS EFFECTS

One of the effects of the present invention is that it can provide a method for manufacturing a porous carbon support in which mesopores are formed in the outer portion and micropores are formed in the inner portion such that silicon can be sufficiently deposited into the inner pores, and a porous carbon support produced therefrom.

One of the effects of the present invention is that it can provide a method for manufacturing a porous carbon support that is capable of manufacturing a negative electrode material having high charge/discharge capacity, and a porous carbon support produced therefrom.

One of the effects of the present invention is that it can provide a method for manufacturing a porous carbon support that is capable of manufacturing a negative electrode material having improved cycle characteristics, and a porous carbon support produced therefrom.

One of the effects of the present invention is that it can provide a method for manufacturing a porous carbon support that is capable of manufacturing a negative electrode material having excellent mechanical properties, and a porous carbon support produced therefrom.

However, various advantageous and beneficial advantages and effects of the present invention are not limited to the above-described contents, and will be more easily understood in the process of describing specific embodiments of the present invention.

### DESCRIPTION OF DRAWINGS

FIG. 1 is an SEM image of the cross-section of pitch immediately after stabilization in Manufacture Example 1.
FIG. 2 is an SEM image of the cross-section of pitch immediately after stabilization in Manufacture Example 3.
FIG. 3 is a graph showing the results of an electrochemical evaluation conducted after manufacturing a half coin cell using the porous carbon supports of Example 1 and Comparative Example 1, respectively.

### BEST MODE

Hereinafter, embodiments of the present invention will be described with reference to specific embodiments and the attached drawings. It should be understood that this is not intended to limit the technology described in the present specification to specific embodiments, but includes various modifications, equivalents and/or alternatives of the embodiments of the present invention. In connection with the description of the drawings, similar reference numerals may be used for similar components.

Additionally, in order to clearly explain the present invention in the drawings, parts that are not related to the description are omitted, and the thickness is enlarged to clearly express various layers and regions, and components with the same function within the scope of the same idea can be described by using the same reference numerals.

In the present specification, expressions such as "have", "may have", "include", or "may include" indicate the presence of a corresponding feature (e.g., a component such as a number, function, operation or part), and do not exclude the presence of additional features.

In the present specification, the expressions "A or B", "at least one of A or/and B", or "one or more of A or/and B" and the like may include all possible combinations of the items listed together. For example, "A or B", "at least one of A and B", or "at least one of A or B" may refer to all cases where (1) at least one of A is included, (2) at least one of B is included, or (3) at least one of A and at least one of B is included.

All numbers and expressions indicating the amounts of components, reaction conditions and the like described in the present specification should be understood to be modified by the term "about" in all cases unless otherwise stated.

The present invention relates to a method for manufacturing a porous carbon support. The method for manufacturing a porous carbon support method according to an exemplary embodiment of the present invention may include (1) subjecting a petroleum-based raw material to pyrolysis and polycondensation to form pitch; (2) solidifying and pelletizing the pitch to obtain solid pitch pellets; (3) stabilizing the solid pitch pellets without pulverization; and (4) carbonizing the stabilized pitch pellets to obtain a carbonized product.

Hereinafter, each step of the present invention will be described in detail.

Step (1) of the method for manufacturing a porous carbon support according to the present invention may be a step of synthesizing pitch by subjecting a petroleum-based raw material to pyrolysis and polycondensation.

In a specific embodiment of the present invention, the petroleum-based raw material may include at least one selected from the group consisting of thermal cracking fuel oil (PFO), naphtha cracking bottom oil (NCB), ethylene cracker bottom oil (EBO), vacuum residue (VR), de-asphalted oil (DAO), atmospheric residue (AR), fluidized catalytic cracking (RFCC-DO), residue fluid catalytic cracking decant oil (RFCC-DO) and heavy aromatic oil. In a preferred embodiment of the present invention, the petroleum-based raw material may include pyrolysis fuel oil.

In a specific embodiment of the present invention, the pyrolysis and polycondensation of the petroleum-based raw material may be performed at a temperature of 350°C or more and/or 500°C or less. The pyrolysis and polycondensation temperature may be 350°C or more, 360°C or more, 370°C or more, 380°C or more, 390°C or more, 400°C or more, 410°C or more, 420°C or more, or 430°C or more, and may be 500°C or less, 490°C or less, 480°C or less, or 470°C or less, but is not limited thereto. When the pyrolysis and polycondensation temperature satisfies the above ranges, pitch including a relatively large amount of low molecular weight components may be manufactured. In addition, during the activation process described below, components with relatively low molecular weights are vaporized first, thereby sufficiently forming mesopores in the carbon support. If the temperature of the pyrolysis and polycondensation of the petroleum-based raw material is too low, it may be difficult to manufacture a solid pitch at room temperature, and if the temperature is too high, relatively high molecular weight components may be included in the pitch in large quantities, making it impossible to manufacture a carbon support having mesopores.

In a specific embodiment of the present invention, the pyrolysis and polycondensation of the petroleum-based raw material may be performed under an atmosphere of an oxidizing gas, an inert gas or a mixture thereof. In a preferred specific embodiment of the present invention, the oxidizing gas may be oxygen, ozone or a combination thereof, the inert gas may be nitrogen, helium, neon, argon or a combination thereof, and the mixture thereof may be air, but is not particularly limited thereto.

When an oxidizing gas is used during the pyrolysis and polycondensation of the petroleum-based raw material, pitch with a high softening point may be manufactured, but it is difficult to perform the pyrolysis and polycondensation at a high temperature. When an inert gas is used during the pyrolysis and polycondensation of petroleum-based raw materials, pyrolysis and polycondensation may be performed at a high temperature, but it is difficult to manufacture a pitch having a relatively high softening point. When a mixed gas of an oxidizing gas and an inert gas is used during the pyrolysis and polycondensation of petroleum-based raw materials, pyrolysis and polycondensation may be performed at a relatively high temperature to manufacture a pitch having a relatively high softening point.

In a specific embodiment of the present invention, the above gas may be supplied at a flow rate of 10 to 800 mL/min during the pyrolysis and polycondensation of petroleum-based raw materials. In a preferred specific embodiment of the present invention, the gas may be supplied at a flow rate of 100 to 500 mL/min during the pyrolysis and polycondensation of petroleum-based raw materials. If the flow rate of the gas is less than 10 mL/min, the yield of the pitch increases, but the low molecular weight component increases too much, which is disadvantageous for subsequent processes (e.g., stabilization). When the flow rate of the gas exceeds 800 mL/min, the yield of the pitch may decrease.

In a specific embodiment of the present invention, the pyrolysis and polycondensation of the petroleum raw material may be performed for 1 to 10 hours. In a preferred specific embodiment of the present invention, the pyrolysis and polycondensation of the petroleum raw material may be performed for 2 to 8 hours. In a more preferred specific embodiment of the present invention, the pyrolysis and polycondensation of the petroleum raw material may be performed for 2 to 7 hours. If the pyrolysis and polycondensation time of the petroleum raw material is less than 1 hour, it is difficult to manufacture a pitch having a high softening point, and if the pyrolysis and polycondensation time of the petroleum raw material exceeds 10 hours, an excessive amount of quinoline insoluble components may be generated.

In a specific embodiment of the present invention, the pyrolysis and polycondensation of the petroleum raw material may be performed under stirring. The stirring conditions of the petroleum raw material are not particularly limited, but, for example, a stirrer rotating at 10 to 500 rpm may be used.

In a specific embodiment of the present invention, the softening point of the pitch synthesized in step (1) may be 200°C or more. Since the pitch synthesized in step (1) has a high softening point, when it is used as a precursor for manufacturing a carbon support, the stabilization process is easy, and a high yield may be obtained after carbonization and activation. The upper limit of the softening point of the pitch may be, for example, 350°C or less, 330°C or less, or 300°C or less, but is not limited thereto.

In a specific embodiment of the present invention, the yield of the pitch synthesized in step (1) may be 10 to 50 wt%. In another specific embodiment of the present invention, the yield of the pitch may be 10 to 40 wt%. In still another specific embodiment of the present invention, the yield of the pitch may be 20 to 30 wt%

In a process for manufacturing a porous carbon support from a petroleum-based raw material according to an embodiment of the present invention, pretreating the petroleum-based raw material may be performed before step (1) above. By removing the low-boiling point components included in the petroleum-based raw material through the pretreatment step, a pitch having a higher softening point may be manufactured.

In a specific embodiment of the present invention, the pretreating may be performed at a temperature equal to or less than the pyrolysis and polycondensation temperature of the petroleum-based raw material in step (1), but is not particularly limited to this condition. Specifically, the pretreating may be performed at 250 to 450°C, preferably 250 to 400°C, and more preferably 300 to 400°C.

In a specific embodiment of the present invention, the pretreating may be performed for a time equal to or shorter than the pyrolysis and polycondensation time of the petroleum-based raw material in step (1), but is not particularly limited to this condition. Specifically, the pretreating may be performed for 1 to 8 hours, preferably 1 to 6 hours, and more preferably 1 to 5 hours.

### Step (2)

In the method for manufacturing a porous carbon support according to the present invention, step (2) may be a step of solidifying and pelletizing pitch to obtain solid pitch pellets.

The liquid pitch obtained in step (1) is solidified, for example, by extrusion and cooling, and is pelletized into a desired size to obtain solid pitch pellets. The process of extruding, cooling and pelletizing the liquid pitch to obtain solid pitch pellets may be performed by using a commercialized device. For example, this process may be performed by using a double belt cooler & flaker of IPCO, but is not particularly limited to this device.

The pitch pellets obtained in step (2) has an average particle size of 3 to 30 mm, and preferably 5 to 25 mm. When the average particle size of the pitch pellets is within this range, a porous carbon support may be manufactured through stabilization, carbonization and activation described below without separately pulverizing the pitch pellets. Therefore, a porous carbon support having controlled pore characteristics may be provided while improving the yield of the product through a simple process.

### Step (3)

Step (3) of the method for manufacturing a porous carbon support according to the present invention may be a step for stabilizing solid pitch pellets without pulverizing the same. Specifically, it may be a step for stabilizing the structure of pitch by primarily oxidizing solid pitch pellets that have not been pulverized.

The method for manufacturing a porous carbon support according to the present invention may not pulverize the solid pitch pellets manufactured in step (2). Conventionally, a carbon precursor in the form of pellets was manufactured and pulverized into powder form, and then, an activation process was performed to manufacture a porous carbon support. This is because when the pellets are stabilized in an unpulverized state, oxygen does not permeate into the interior of the pellets, and thus, a reaction with oxygen may not occur. This is because the pitch may not be isotropically maintained during the carbonization and activation processes, and the interior of the pellets may be coked during carbonization, thereby preventing the pores from developing smoothly. However, when the manufactured pellets are pulverized, the process is somewhat complicated, and there is a disadvantage in that the yield is reduced during the pulverization process. The method for manufacturing a porous carbon support according to the present invention may simplify the process and increase process efficiency by stabilizing the solid pitch pellets manufactured in step (2) without pulverizing the same.

In one example of the present invention, the thickness of the solid pitch pellets stabilized in step (3) may be 1 mm or more. The thickness of the pitch pellets may mean, for example, the shortest length among the lengths of an imaginary line passing through the center of the pitch pellets. The thickness of the solid pitch pellets may be 1 mm or more, 2 mm or more, or 3 mm or more, and may be 10 mm or less, 9 mm or less, or 8 mm or less, but is not limited thereto. If the solid pitch pellets stabilized in step (3) are not pulverized, the thickness may be satisfied, and by going through the stabilization step described below, a porous carbon support having excellent pore characteristics and being effectively usable for various purposes may be manufactured.

In one example of the present invention, the stabilization of the pitch pellets may be performed at a temperature of 250°C or more and/or 400°C. The stabilization temperature of the pitch pellets may be 250°C or more, 260°C or more, 270°C or more, or 280°C or more, and can be 400°C or less, 390°C or less, 380°C or less, 370°C or less, 360°C or less, or 350°C or less, but is not limited thereto. When the stabilization temperature of the pitch pellets satisfies the above range, the carbon structure in the pitch changes from thermoplastic to thermosetting, and the structure may be stably maintained during the subsequent carbonization process.

In this case, the heating rate may be 0.5°C/min or more and/or 10°C/min or less. The above heating rate may be 0.5°C/min or more, 1°C/min or more, or 2°C/min or more, and 10°C/min or less, 8°C/min or less, or 6°C/min or less, but is not limited thereto. If the heating rate is too slow, the interior of the pellet may not be sufficiently stabilized. In addition, if the heating rate is too fast, the reaction time with oxygen is shortened, and the temperature rises quickly such that the pitch may not be cross-linked and may be melted.

In one example, the heating may be performed by microwaves and/or plasma. In a conventional method for manufacturing a porous carbon support, the pellet was heated in various ways in the stabilization step. A typical heating method in the stabilization step may include heating using an electric furnace, but in the case of such a heating method, heat transfer in the thickness direction may not be sufficiently performed such that uniform heat treatment may not be performed. As a result, the pitch may not be stabilized and may be melted, pores may not be developed in the carbonization and activation process, or the structural stabilization of the pitch may not be performed. As a result, in the conventional manufacturing method, solid pitch pellets are pulverized to form powder, and then stabilized. In contrast, the method for manufacturing a porous carbon support according to the present invention heats the pitch pellets using microwaves and/or plasma, thereby heating the pitch pellets from the inside of the pitch, so as to enable uniform heating. Through this, oxygen diffusion into the inside is promoted such that even if the pitch pellets in an unpulverized state are stabilized without pulverizing the same, a porous carbon support having excellent pore characteristics may be manufactured.

In a specific embodiment of the present invention, the stabilization of the pitch pellets may be performed at a pressure of 0.1 to 10 bar, and preferably 0.5 to 5 bar. When the stabilization of the pitch pellets is performed at this pressure, the structure of the carbon inside the pellets may be sufficiently stabilized.

In a specific embodiment of the present invention, the stabilization of the pitch pellets may be performed under conditions of a flow rate of an oxidizing gas, preferably air or oxygen, of 0.1 to 500 mL/min, and preferably 1 to 300 mL/min. When the stabilization of the pitch pellets is performed under this oxidizing gas flow condition, the structure of the carbon inside the pellet may be sufficiently stabilized.

In a specific embodiment of the present invention, the stabilization of the pitch pellets may be performed for 1 to 10 hours, and preferably 2 to 8 hours. When the stabilization of the pitch pellets is performed for this time, the structure of the carbon inside the pellet may be sufficiently stabilized.

In one example, the oxygen content of the stabilized pitch pellets in step (3) of the method for manufacturing a porous carbon support according to the present invention may be 10 wt% or more based on the weight of the entire pitch pellet. The oxygen content of the stabilized pitch pellets may be a value measured by using SEM-EDS. The oxygen content of the above pitch pellets may be 10 wt% or more, 12 wt% or more, 14 wt% or more, or 15 wt% or more, and 30 wt% or less, 28 wt% or less, 26 wt% or less, or 25 wt% or less, based on the total weight of the pitch pellet, but is not limited thereto.

The pitch pellets may be stabilized by heating with microwaves and/or plasma. When the pitch pellets are heated with microwaves and/or plasma, uniform heat treatment may be possible by heating from the inside of the pellet, thereby allowing the oxygen content of the stabilized pitch pellets to satisfy the above range. If the oxygen content of the stabilized pitch pellets is too low, melting or coking may occur due to insufficient oxygen, which acts as a cross-linker in the carbonization process. In addition, if the oxygen content of the stabilized pitch pellets is too high, excessive reaction with oxygen may occur, which may reduce the yield in the carbonization process, and structural development may not be performed smoothly.

In another example, in step (3) of the method for manufacturing a porous carbon support according to the present invention, the stabilized pitch pellets may have a distribution deviation of oxygen contents in the cross-section of 30% or less. The oxygen content in the cross-section of the stabilized pitch pellets may be a value measured by using line profiling using SEM-EDS, and the distribution deviation (d) of the oxygen content may mean a percentage of a difference (|(M-a)|) between the average (M) of the oxygen contents (wt%) measured in the cross-section of a specimen and the value (a) of the oxygen content (weight %) having the greatest difference from the average (M) divided by the average (M) (|(M-a)|/M). The distribution deviation of the oxygen contents in the cross-section of the pitch pellets stabilized in step (3) above may be 30% or less, 28% or less, 26% or less, 24% or less, 22% or less, or 20% or less, and the lower limit is not particularly limited, but may be, for example, 0% or more, more than 0%, 1% or more, 2% or more, 3% or more, 4% or more, or 5% or more, but is not limited thereto.

As described above, the pitch pellets in step (3) of the method for manufacturing a porous carbon support according to the present invention may be stabilized by heating with microwaves and/or plasma in a finely pulverized state. When the pitch pellets in a finely pulverized state are heated in the air by using a general electric furnace, the distribution deviation of the oxygen contents may become large due to the difference in the heating speed between the center and the outer part of the pitch pellet. On the other hand, in the case of the method for manufacturing a porous carbon support according to the present invention, uniform heat treatment may be achieved and a low oxygen content deviation may be achieved by stabilizing the pitch pellets in a pulverized state using microwaves and/or plasma. In the case where the oxygen content distribution deviation in the cross-section of the pitch pellets stabilized in step (3) is too high, the structure of the pellets and the pore structure formed therefrom may be developed unevenly due to the unevenness of the oxygen content.

The method of heating the pitch pellets in a pulverized state with microwaves and/or plasma in step (3) is not particularly limited as long as the pitch pellets may be sufficiently heated. For example, the pitch pellets may be heated with microwaves having an output in the range of 500 W to 1000 W, but is not limited thereto. In addition, the heating may be performed by using plasma in a vacuum (500 mtorr or less) or atmospheric pressure using DC or RF plasma, but is not limited thereto.

### Step (4)

Step (4) of the method for manufacturing a porous carbon support according to the present invention may be a step of carbonizing stabilized pitch pellets to obtain a carbonized body. Through carbonization of the pitch pellets, other functional groups included in the pitch are removed, and a carbonized body composed of substantially pure carbon may be obtained.

In a specific embodiment of the present invention, the carbonization of the pitch may be performed under an inert gas atmosphere. In a preferred specific embodiment of the present invention, the carbonization of the pitch may be performed under a nitrogen or argon atmosphere, but is not particularly limited thereto.

In a specific embodiment of the present invention, the carbonization of the pitch may be performed at a temperature of more than 700°C and less than or equal to 1,000°C, and preferably 800 to 900°C. If the temperature during carbonization of the pitch is lower than this range, the carbonization may not be sufficiently performed, and if the temperature during carbonization of the pitch is higher than this range, the carbonization yield may decrease.

In a specific embodiment of the present invention, the carbonization of the pitch may be performed under a flow rate condition of an inert gas, preferably nitrogen, of 0.1 to 30 mL/min, and preferably 0.1 to 10 mL/min. When the carbonization of the pitch is performed under this inert gas flow rate condition, the pitch may be sufficiently carbonized.

In a specific embodiment of the present invention, the carbonization of the pitch may be performed for 0.5 to 5 hours, and preferably 1 to 3 hours. When the carbonization of the pitch is performed during this time, the pitch may be sufficiently carbonized.

### Step (5)

In the method for manufacturing a porous carbon support according to the present invention, in step (5), the carbonized body may be activated to obtain a porous carbon support. By activating the carbonized body (carbonized pitch), pores are formed in the pitch, thereby obtaining a porous carbon support.

In a specific embodiment of the present invention, the activation of the carbonized body may be performed under an oxidizing gas atmosphere. In a preferred specific embodiment of the present invention, the activation of the carbonized body may be performed under a steam atmosphere, but is not particularly limited thereto.

In a specific embodiment of the present invention, the activation of the carbonized body may be performed at a temperature of more than 700°C and less than or equal to 1,000°C, and preferably 800 to 900°C. When the activation of the carbonized body is performed at this temperature, a porous carbon support in which micropores and mesopores are sufficiently formed may be obtained.

In a specific embodiment of the present invention, the activation of the carbonized body may be performed at a pressure of 0.1 to 10 bar, and preferably 0.1 to 5 bar. When the activation of the carbonized body is performed at this pressure, a porous carbon support in which micropores and mesopores are sufficiently formed may be obtained.

In a specific embodiment of the present invention, the activation of the carbonized body may be performed under a flow rate condition of an oxidizing gas, preferably water vapor, of 0.1 to 100 mL/min, and preferably 0.1 to 50 mL/min. When the activation of the carbonized body is performed under this oxidizing gas flow rate condition, a porous carbon support in which micropores and mesopores are sufficiently formed may be obtained.

In a specific embodiment of the present invention, the activation of the carbonized body may be performed for 0.5 to 5 hours, and preferably 1 to 3 hours. If the activation of the carbonized body is performed during this time, a porous carbon support in which micropores and mesopores are sufficiently formed may be obtained.

In a specific embodiment of the present invention, steps (4) and (5) above may be performed in a heating furnace using microwaves and/or plasma, respectively. In a preferred embodiment of the present invention, steps (4) and (5) above may both be performed in a heating furnace using microwaves and/or plasma. The heating furnace using microwaves and/or plasma may increase the temperature of the pellets themselves without increasing the temperature of other parts of the heating furnace of the pitch pellets.

In a specific embodiment of the present invention, steps (3) to (5) above may be performed continuously in one device. In a preferred embodiment of the present invention, steps (3) to (5) above may be performed continuously in one rotary kiln, but are not particularly limited to this device. Since the stabilization, carbonization and activation of the pitch pellets are performed continuously in one device, the optimization of the process may be easily achieved.

In a specific embodiment of the present invention, the porous carbon support obtained in step (5) may be further pulverized or ground and classified. The porous carbon support may be further finely divided by the pulverization or grounding, and the particle size distribution of the porous carbon support may be uniform by the classification. Herein, the classification may be dry classification, wet classification or classification using a sieve. By the pulverization or grounding and classification treatment, a porous carbon support powder having an average diameter of 1 to 20 µm may be obtained.

In one example of the present invention, the method for manufacturing a porous carbon support according to the present invention may further include depositing silicon on the manufactured porous carbon support.

In this case, the deposition may be performed at a temperature of 300°C or more and/or 600°C or less and under a silane (SiH₄) gas atmosphere of 150 sccm or more and/or 500 sccm or less. The deposition may be performed, for example, by chemical vapor deposition (CVD) and may be performed under atmospheric pressure conditions, but is not limited thereto. By the above deposition, silicon may be deposited on the surface and inside the pores of the porous carbon support according to the present invention.

In addition, the present invention relates to a porous carbon support. The porous carbon support according to the present invention may be manufactured by the above-described method.

In one example of the present invention, the porous carbon support according to the present invention may have a ratio of the volume of mesopores to the volume of the entire pores of 0.1 or more. The pores of the porous carbon support may be classified into micropores having a diameter of less than 2 nm, mesopores having a diameter of 2 nm to 50 nm, and macropores having a diameter of more than 50 nm, depending on their size. Such porous supports have been studied in the direction of increasing the ratio of micropores to increase the specific surface area or increasing the ratio of macropores to increase the amount of material loaded inside the pores. However, in the case of many micropores, silicon is difficult to be deposited inside the pores, which causes a problem of reduced electrical capacity. Additionally, in the case of many macropores, silicon may be aggregated, which may cause stress during repeated charge/discharge processes and mechanically damage the negative electrode material.

On the other hand, in the case of mesopores, silicon may be sufficiently deposited into the cores of pores when it is deposited. The porous carbon support according to the present invention may deposit a sufficient amount of silicon inside the pores of the porous support by including mesopores within a predetermined range.

The ratio of the volume of the mesopores to the volume of the entire pores of the porous carbon support may be 0.10 or more, 0.12 or more, 0.14 or more, or 0.15 or more, but is not limited thereto. The upper limit of the ratio of the mesopores to the entire pores of the porous carbon support is not particularly limited, but may be, for example, 1.0 or less or less than 1.0. When the ratio of mesopores to the entire pores of the porous carbon support satisfies the above range, it may have excellent electrical properties while preventing excessive silicon aggregation, thereby preventing damage due to volume expansion of silicon.

In an embodiment of the present invention, the tap density of the porous carbon support according to the present invention may be 0.7 g/mL or less. The tap density of the porous carbon support may be a value measured by using PT-TD200 (Pharma Test). Specifically, 40 mL of the porous carbon support is loaded into a cylinder and tapped 1,000 times, and the first volume is observed. After the observation, tapping is performed 1,000 times again, and the volume is observed. This process is repeated three times until there is no difference from the previous volume, and then. the tap density may be calculated as the final volume. The tap density of the porous carbon support may be 0.70 g/mL or less, 0.65 g/mL or less, 0.60 g/mL or less, 0.55 g/mL or less, and may be 0.05 g/mL or more or 0.1 g/mL or more, but is not limited thereto. If the tap density of the porous carbon support is too low, process control may be difficult during silane gas deposition, which may result in a decrease in yield. In addition, if the tap density of the porous carbon support is too high, uniform coating may be difficult during silane gas deposition.

In one example of the present invention, the BET specific surface area of the porous carbon support according to the present invention may be in a range of 300 m²/g or more and/or 3,000 m²/g. The BET specific surface area of the porous carbon support may be a value measured by using ASAP 2420 (Micromeritics instrument (USA)). Specifically, analysis was performed after vacuum drying at 300°C for 5 hours, and the N2/77K Isotherm adsorption results according to ISO9277 may be used to calculate using the BET equation and the BJH equation. The BET surface area of the porous carbon support may be 300 m²/g or more, 400 m²/g or more, or 500 m²/g or more, and may be 3,000 m²/g or less, 2,800 m²/g or less, 2,600 m²/g or less, or 2,000 m²/g or less, but is not limited thereto. If the BET surface area of the porous carbon support is excessively low, the ratio of macropores may increase, which may lower the mechanical strength of the negative electrode material, and there may be a lack of effective pores. In addition, if the BET surface area of the porous carbon support is too high, the ratio of micropores may increase, and silicon may not be sufficiently deposited into the core of the porous carbon support.

In an embodiment of the present invention, the diameter of the porous carbon support according to the present invention may be 20 µm or less. The diameter may refer to the D50 diameter and may be a value measured by using a MICROTRAC S3500 device. Specifically, it may refer to an average value obtained by dispersing the porous carbon support in ethanol and then performing particle size analysis three times. The diameter of the porous carbon support may be 20 µm or less, 18 µm or less, 16 µm or less, 14 µm or less, or 12 µm or less, and may be 1 µm or more, 2 µm or more, 3 µm or more, 4 µm or more, or 5 µm or more, but is not limited thereto. If the diameter of the porous carbon support is too small, when performing coating, silicon may be quickly filled inside, and then, additional coating may be performed on the surface such that the surface coating layer may be formed thickly. In this case, deterioration may be accelerated during charging and discharging, and the agglomeration of materials with small particle sizes may occur during electrode manufacturing, and deterioration of the agglomerated portion may be significant. In addition, if the diameter of the porous carbon support is too large, it may be difficult to diffuse silane gas into the interior of the porous carbon support, making it difficult to form a uniform silicon coating layer inside the support. In addition, if the diameter of the porous carbon support is too large, it may be difficult to uniformly coat a slurry on a current collector during electrode manufacturing, which may reduce the uniformity of capacity.

In one example, the porous carbon support according to the present invention may include macropores having a diameter exceeding 50 nm. In this case, the ratio of the volume of the macropores to the volume of the entire pores of the porous carbon support may be 0.4 or less. The ratio of the volume of macropores to the volume of the entire pores of the porous carbon support may be 0.40 or less, 0.38 or less, 0.36 or less, 0.34 or less, 0.32 or less, or 0.30 or less, but is not limited thereto. The lower limit of the ratio of the volume of macropores to the volume of the entire pores of the porous carbon support is not particularly limited, but may be, for example, 0 or more or more than 0. If the ratio of the macropores of the porous carbon support is too high, the mechanical strength of the negative electrode material manufactured with the porous carbon support may be reduced. In addition, the local agglomeration of silicon may occur inside the negative electrode material, which may cause stress due to volume expansion during repeated charge and discharge processes, thereby causing damage to the negative electrode material.

In one example, silicon may be disposed on the surface and inside the pores of the porous carbon support according to the present invention. The silicon may be formed by deposition as described above. Since the porous carbon support according to the present invention has the above structure, the negative electrode material manufactured with the porous carbon support according to the present invention may have high electrical capacity while minimizing the influence due to volume expansion of silicon.

In another example, the content of the deposited silicon may be 10 wt% or more based on the weight of the total particles. The content of the silicon may be a value obtained by analysis through energy dispersive spectrometer (EDS). The content of the deposited silicon may be 10 wt% or more, 15 wt% or more, 20 wt% or more, 25 wt% or more, or 30 wt% or more, but is not limited thereto. In addition, the content of the deposited silicon may be 60 wt% or less, 58 wt% or less, 56 wt% or less, 54 wt% or less, 52 wt% or less, or 50 wt% or less, but is not limited thereto. If the content of the deposited silicon is too small, the electric capacity may be reduced. In addition, if the content of the silicon is too large, the problem caused by the volume expansion of the silicon during charge and discharge may not be solved, which may cause structural damage to the negative electrode material and deteriorate the cycle characteristics.

In addition, the present invention relates to a battery negative electrode material including the porous carbon support described above. The battery negative electrode material including the porous carbon support according to the present invention may have improved mechanical strength along with high electric capacity and excellent cycle characteristics.

The method for manufacturing a battery negative electrode material is not particularly limited, and a general method for manufacturing a battery negative electrode material may be used. For example, the battery negative electrode material may be manufactured by mixing a porous carbon support, an active material, a conductive agent, and a binder, and coating/drying/rolling a member such as an electrode current collector, but is not limited thereto.

In addition, the present invention relates to a battery including the battery negative electrode material described above. A battery including a battery negative electrode material according to the present invention may be a lithium-ion battery or an all-solid-state battery, but is not limited thereto.

Specifically, the lithium-ion battery may include a positive electrode, a negative electrode, a separator and an electrolyte. In this case, the negative electrode may include the above-described battery negative electrode material. The positive electrode may use a material that is usable for a lithium-ion battery, and may include, for example, at least one positive electrode active material selected from doped or undoped lithium nickel oxide, lithium cobalt oxide, lithium cobalt aluminum oxide, lithium nickel cobalt manganese oxide, lithium manganese oxide and lithium nickel cobalt aluminum oxide, and a positive electrode current collector selected from aluminum, stainless steel, nickel, titanium, platinum or an alloy thereof, but is not limited thereto. In addition, the separator may use a typical separator that is usable for a lithium-ion battery. The separator may include one or more selected from, for example, glass fiber, polyester, Teflon, polyethylene, polypropylene and polytetrafluoroethylene (PTFE), but is not limited thereto.

The negative electrode of the lithium-ion battery may include the above-described battery negative electrode material. The negative electrode may include a negative electrode current collector and a battery negative electrode material, and the negative electrode current collector may include one or more selected from aluminum, stainless steel, nickel, titanium, platinum or an alloy thereof, but is not limited thereto.

The electrolyte of the lithium-ion battery may include an organic liquid electrolyte, an inorganic liquid electrolyte, a polymer electrolyte or a molten inorganic electrolyte usable in a lithium-ion battery, but is not limited thereto.

The all-solid-state battery may specifically include a positive electrode, a negative electrode and a solid electrolyte, and may further include a separator if necessary, but is not limited thereto. The positive electrode may include the above-described positive electrode active material, and may include a positive electrode current collector if necessary, but is not limited thereto.

The negative electrode may include a battery negative electrode material according to the present invention. The negative electrode may have a single-layer structure including the battery negative electrode material, or may further include a negative electrode current collector as needed, but is not limited thereto.

The solid electrolyte may optionally use a solid electrolyte that is usable for an all-solid-state battery. The solid electrolyte may be at least one selected from the group consisting of, for example, a Garnet-type, a Nasicon-type, a LISICON-type, a perovskite-type and a LiPON-type, but is not limited thereto.

### MODES OF THE INVENTION

Hereinafter, preferred examples are presented to help understand the present invention. However, the following examples are provided only to help understand the present invention more easily, and the content of the present invention is not limited by the following examples.

### Manufacture Example 1: Manufacture of a porous carbon support

300 g of petroleum-based residual oil (YNCC, HTC PFO (pyrolysis fuel oil)) was placed in a reactor equipped with a stirrer, and pyrolysis and polycondensation were performed at 450°C for 3 hours while supplying nitrogen at a flow rate of 100 mL/min. In this case, the stirrer was rotated at a speed of 200 rpm to mix the reactants. The polymerized pitch was solidified and pelletized to obtain solid pitch pellets having a thickness of 3.0 mm.

The solid pitch pellets obtained above were placed in a rotary kiln using a plasma with an output of 200 W to sequentially perform stabilization, carbonization and activation. The conditions for stabilization, carbonization and activation are as shown in Table 1 below.

The activated carbonized body, which was activated above, was pulverized using a pulverizer (Netsch, air jet mill) to manufacture a porous carbon support.

**[Table 1]**

| Step | Condition | Manufacture Example 1 | Manufacture Example 2 | Manufacture Example 3 | Manufacture Example 4 |
|---|---|---|---|---|---|
| Stabilizing | Temperature (°C) | 320 | 320 | 320 | 320 |
| | Time (hr) | 2 | 2 | 2 | 2 |
| | Atmosphere | Air | Air | Air | Air |
| | Heat Source | Plasma (200W) | Microwave (800W) | Electric heating | Electric heating |
| Carbonizi ng | Temperature (°C) | 900 | 900 | 900 | 900 |
| | Time (hr) | 1 | 1 | 1 | 1 |
| | Atmosphere | Nitrogen | Nitrogen | Nitrogen | Nitrogen |
| Activating | Temperature (°C) | 900 | 900 | 900 | 900 |
| | Time (hr) | 3 | 3 | 3 | 3 |
| | Flow Rate of Water Vapor (mL/min) | 10 | 10 | 10 | 10 |

### Manufacture Example 2

A porous carbon support was manufactured in the same manner as Manufacture Example 1, except that the thickness of the solid pitch pellets was changed as shown in Table 2 below, and heating was performed using a microwave with an output of 800 W instead of plasma in the stabilizing step.

### Manufacture Example 3

A porous carbon support was manufactured in the same manner as Manufacture Example 1, except that the thickness of the solid pitch pellets was changed as shown in Table 2 below, and heating was performed using a general electric furnace instead of plasma in the stabilizing step.

### Manufacture Example 4

A porous carbon support was manufactured in the same manner as Manufacture Example 1, except that the manufactured solid pitch pellets was pulverized to produce a powder having a thickness of 200 µm, and then, heating was performed using a general electric furnace instead of plasma in the stabilizing step.

**[Table 2]**

| | Manufacture Example 1 | Manufacture Example 2 | Manufacture Example 3 | Manufacture Example 4 |
|---|---|---|---|---|
| Thickness | 3.0 mm | 2.1 mm | 2.0 mm | 200 µm |

Table 3 below shows the measured physical properties of the manufactured porous carbon supports. The specific surface area of the porous carbon supports was measured using Belsorp mini II according to ASTM D4820-93. The tap density of the carbon supports was measured using a tap density analyzer (Electrolab, ETD-1020x) according to ASTM B527. The average particle size of the carbon supports was measured using a particle size analyzer (Horiba, laser particle analyzer, LA-960V2) according to ASTM E112. The oxygen content and internal deviation were measured by line profiling using SEM-EDS on the cross-section of the pitch immediately after stabilization.

**[Table 3]**

| | Manufacture Example 1 | Manufacture Example 2 | Manufacture Example 3 | Manufacture Example 4 |
|---|---|---|---|---|
| Average Particle Size (µm) | 10.22 | 7.20 | 10.45 | 9.21 |
| Specific Surface Area (m²/g) | 1285.9 | 944.2 | 254.6 | 1240.9 |
| Total Pore Volume (cm³/g) | 0.50 | 0.40 | 0.13 | 0.43 |
| Tap Density (g/mL) | 0.41 | 0.52 | 0.61 | 0.59 |
| Micropores (%) | 42.1 | 72.9 | 53.3 | 72.8 |
| Mesopores (%) | 51.6 | 24.1 | 45.4 | 25.1 |
| Average Oxygen Content (wt%) | 17.3 | 15.6 | 4.7 | 18.8 |
| Maximum Deviation of Oxygen Contents (wt%) | 2.5 | 2.2 | 2.0 | 1.4 |
| Distribution Deviation of Oxygen Contents (%) | 14.5 | 14.1 | 42.6 | 7.4 |

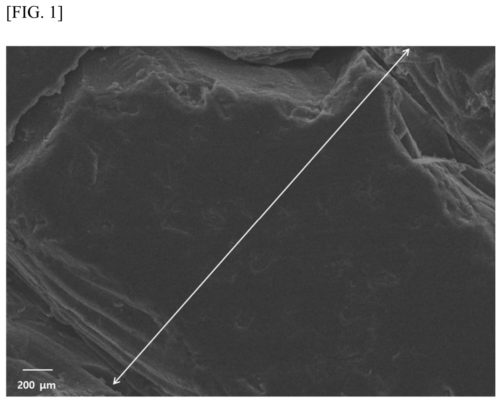

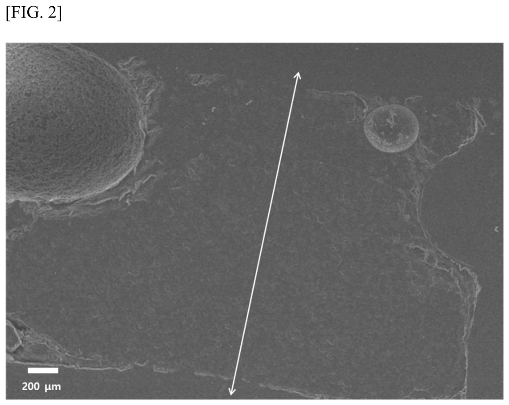

FIG. 1 is an SEM image of the cross-section of pitch immediately after stabilization in Manufacture Example 1, and FIG. 2 is an SEM image of the cross-section of pitch immediately after stabilization in Manufacture Example 3. As shown in FIGS. 1 and 2, the oxygen content was measured by line profiling along a line passing through the center of the cross-section of the pitch. In Table 3, the maximum deviation (a) of the oxygen content is the value of the oxygen content that has the greatest difference from the average oxygen content (M). For example, in the case of Manufacture Example 1, the oxygen content in the cross-section of the porous carbon support can be in a range of 17.3 ± 2.5, that is, in a range of 14.8 to 19.8. In this case, the distribution deviation of the oxygen contents may mean a percentage of (|(14.8-17.3)|/17.3).

### Example 1: Preparation of carbon-silicon composite particles

Carbon-silicon composite particles were prepared using the porous carbon support prepared in Manufacture Example 1. 15 to 20 g of the porous carbon support powder of Manufacture Example 1 was placed in a rotary kiln, and silane (SiH₄) gas was injected to coat the porous carbon support.

The pressure during the silane gas coating was performed at normal pressure, and the coating was performed for 1 hour at a temperature of 475°C and a flow rate of 300 sccm.

### Example 2

Carbon-silicon composite particles were prepared in the same manner as in Example 1, except that the porous carbon support manufactured in Manufacture Example 2 was used.

### Comparative Example 1

Carbon-silicon composite particles were prepared in the same manner as in Example 1, except that the porous carbon support manufactured in Manufacture Example 3 was used.

### Comparative Practical Example 1

Carbon-silicon composite particles were prepared in the same manner as in Example 1, except that the porous carbon support manufactured in Manufacture Example 4 was used.

**[Table 4]**

| | | Example 1 | Example 2 | Comparative Practical Example 1 |
|---|---|---|---|---|
| Physical Properties of Carbon Support After Coating | Average Particle Size (µm) | 10.6 | 11.0 | 16.7 |
| | Specific Surface Area (m²/g) | 33.4 | 1.27 | 1.28 |
| | Tap Density (g/mL) | 0.61 | 0.60 | 0.63 |
| | Silicon Content (wt%) | 33.9 | 39.7 | 32.0 |

Table 4 above shows the physical properties measured after depositing silicon on the porous carbon support in Examples 1, 2 and Comparative Practical Example 1. In the case of Comparative Example 1, the specific surface area was too low and the pores facing inward were hardly formed, and thus, the inside of the pores could not be coated with silicon. Referring to Table 4, it can be seen that Examples 1, 2 and Comparative Practical Example 1 all had a silicon content exceeding 30 wt%. Through the above results, it can be confirmed that, in the case of the method for manufacturing a porous carbon support according to the present invention, composite particles having a sufficient amount of silicon deposited thereon can be prepared without pulverizing solid pitch pellets. Experimental Example: Electrochemical evaluation of secondary battery

A half coin cell was manufactured using the prepared carbon-silicon composite particles.

A slurry was prepared by mixing the carbon-silicon composite particles of the examples and comparative examples: conductive material: binder in a ratio of 8:1:1. In this case, the conductive material used super-P, and the binder used a mixture of styrene butadiene rubber (SBR) and sodium carboxymethyl cellulose (CMC) at a weight ratio of 5:5.

The slurry was uniformly applied to copper foil, and primarily dried in an 80°C oven for about 1 hour. After the primary drying, roll pressing was performed, and secondary drying was performed in a 120°C vacuum oven for about 6 hours and 30 minutes to manufacture a negative electrode plate.

A half coin cell was manufactured using the manufactured negative electrode plate and lithium foil as a counter electrode. A porous polyethylene film was used as a separator, and a CR2032 half coin cell was manufactured under the conditions shown in Table 5 below.

The electrolyte was prepared by dissolving 1.3 M LiPF₆ in a solvent in which ethylene carbonate (EC), ethyl methyl carbonate (EMC) and dimethyl carbonate (DMC) were mixed in a volume ratio of 3:5:2, and adding 10 wt% fluoro-ethylene carbonate (FEC), 0.2 wt% lithium tetrafluoroborate (LiBF4), 0.5 wt% vinylene carbonate (VC) and 1 wt% propane sulton (PS) as additives.

**[Table 5]**

| | |
|---|---|
| Composition (AM:CM:BM) | 8:1:1 |
| Area Capacity(mAh/cm²) | 1 |
| Electrolyte | 1.3 M LiPF6 EC/EMC/DMC 3:5:2, FEC 10%, LiBF4 0.2%, 0.5% VC, 1% PS |
| Cut-off Voltage (V) | Formation: 0.005-1.5, Cycle test: 0.005-1.5 |
| C-rate (C) | Formation: 0.1-0.1, 0.005V 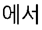 0.01C cut-off (CV) |

In Table 5 above, AM, CM and BM represent the active material (silane-deposited porous carbon support), conductor (Super P carbon black) and binder (styrene-butadiene rubber/carboxymethyl cellulose 5:5), respectively, and EC, EMC, DMC, FEC, VC and PS represent ethylene carbonate, ethyl methyl carbonate, dimethyl carbonate, fluoroethylene carbonate, vinylene carbonate and propane sultone, respectively. Electrochemical analysis was performed on the manufactured half coin cells under the following conditions. Cut off voltage (V): 0.005 - 1.5V (Formation), 0.005 - 1.2V (Cycle)
Formation C-rate (C): 0.1C lithiation, 0.1C delithiation
Cycle C-rate (C): 0.5C lithiation, 0.5C delithiation

**[Table 6]**

| | Charge Capacity (mAh/g) | Discharge Capacity (mAh/g) | ICE (%) |
|---|---|---|---|
| Example 1 | 2110 | 1916 | 90.8 |
| Example 2 | 2050 | 1873 | 91.4 |
| Comparative Example 1 | 2128 | 1922 | 90.3 |

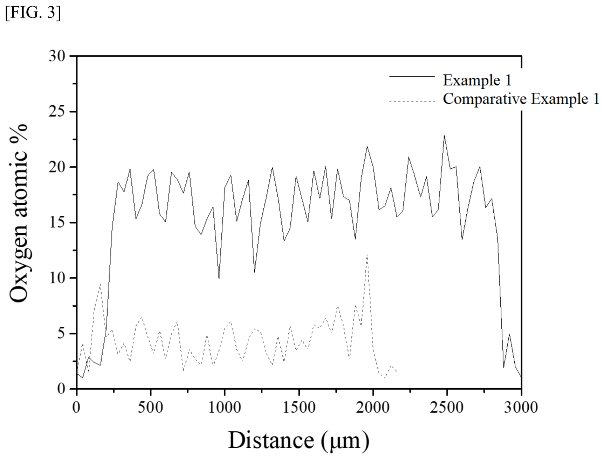

The charge/discharge capacity characteristics were measured as shown in the graph in FIG. 3, with the capacity when charging was completed being referred to as the charge capacity, and the capacity when discharging began being referred to as the discharge capacity. The ICE is a value expressed by dividing the discharge capacity by the charge capacity. Referring to Table 6, it can be seen that the half coin cells manufactured using Examples 1 and 2 and the half coin cells manufactured using Comparative Practical Example 1 have almost the same level of performance in the measurement results of charge capacity, discharge capacity and ICE. Examples 1 and 2 used a porous carbon support stabilized without pulverizing solid pitch pellets in step (3), and Comparative Practical Example 1 used a porous carbon support stabilized by pulverizing solid pitch pellets by a conventional manufacturing method. Considering the above content, in the case of the method for manufacturing a porous carbon support according to the present invention, a porous carbon support having excellent pore characteristics may be manufactured without a separate pulverizing process for solid pitch pellets. Through this, the process efficiency may be greatly improved by the method for manufacturing a porous carbon support according to the present invention.

Although the embodiments of the present invention have been described in detail above, the present invention is not limited by the above-described embodiments and the attached drawings, but is intended to be limited by the attached claims. Accordingly, various forms of substitution, modification and change may be made by a person having ordinary knowledge in the relevant technical field within the scope that does not depart from the technical idea of the present invention described in the claims, and this will also be considered to fall within the scope of the present invention.

### INDUSTRIAL APPLICABILITY

The present invention may provide a method for manufacturing a porous carbon support, the method including the steps of: (1) subjecting a petroleum-based raw material to pyrolysis and polycondensation to form pitch; (2) solidifying and pelletizing the pitch to obtain solid pitch pellets; (3) stabilizing the solid pitch pellets without pulverization; and (4) carbonizing the stabilized pitch pellets to obtain a carbonized product.

## Claims

1. A method for manufacturing a porous carbon support, comprising:
(1) subjecting a petroleum-based raw material to pyrolysis and polycondensation to form pitch;
(2) solidifying and pelletizing the pitch to obtain solid pitch pellets;
(3) stabilizing the solid pitch pellets without pulverization; and
(4) carbonizing the stabilized pitch pellets to obtain a carbonized product.

2. The method of claim 1, wherein a polycondensation temperature of the pitch synthesis in step (1) is within a range of 350°C or more and/or 500°C or less.

3. The method of claim 1, wherein a softening point of the pitch synthesized in step (1) is 200°C or more.

4. The method of claim 1, wherein a thickness of the solid pitch pellets of step (3) is 1 mm or more.

5. The method of claim 1, wherein step (3) comprises heating the unpulverized solid pitch pellets to a temperature of 250°C or more and/or 400°C or less, and
wherein the heating is performed by microwave or plasma.

6. The method of claim 1, wherein an oxygen content of the pitch pellets stabilized in step (3) is 10 wt% or more.

7. The method of claim 1, wherein in step (3), a distribution deviation of oxygen contents in a stabilized pitch pellet cross-section is 30% or less.

8. The method of claim 1, further comprising:
depositing silicon after step (4).

9. The method of claim 8, wherein the depositing is performed at a temperature of 300°C or more and/or 600°C or less and under a silane (SiH₄) gas atmosphere of 50 sccm or more and/or 500 sccm or less.

10. The method of claim 8, wherein a content of the deposited silicon is 10 wt% or more based on a weight of the entire porous carbon support.

11. A porous carbon support manufactured by the method according to any one of claims 1 to 10.

12. A battery negative electrode material, comprising the porous carbon support of claim 11.
